# EUROPEAN PATENT SPECIFICATION

(11) **EP 1 953 646 B1**
(45) Date of publication and mention of the grant of the patent: **24.04.2013**
(21) Application number: 05809567.0
(22) Date of filing: 21.11.2005
(51) Int. Cl.: H04L 12/58

(54) **MAIL DELIVERY PROGRAM, MAIL DELIVERY METHOD, AND MAIL DELIVERY DEVICE**
POST-ABLIEFERPROGRAMM, POST-ABLIEFERVERFAHREN UND POST-ABLIEFEREINRICHTUNG
PROGRAMME, PROCEDE ET DISPOSITIF DE LIVRAISON DE COURRIER

(43) Date of publication of application: 06.08.2008
(73) Proprietor: Fujitsu Ltd., Kawasaki-shi, Kanagawa 211-8588 (JP)
(72) Inventor: MATSUMOTO, Akiko, Kawasaki-shi Kanagawa 211-8588 (JP); KOBAYASHI, Masahito, Toyama-shi Toyama 939-2392 (JP)
(74) Representative: Sunderland, James Harry
(86) International application number: PCT/JP2005/021381
(87) International publication number: WO 2007/057976

(56) References cited:
- EP-A2- 0 936 786
- JP-A- 11 025 010
- JP-A- 11 168 498
- JP-A- 2000 222 301
- JP-A- 2002 077 222
- JP-A- 2003 124 999

## Description

### Technical Field

The present invention relates to a program, method, and apparatus for sending and receiving mail messages, and more particularly to a program, method, and apparatus for sending and receiving electronic mail messages.

### Background Art

Electronic mail systems in recent years require unification of their standard specifications. The existing systems comply with Request For Comments (RFC) and other standards for mail message contents (i.e., header, body, etc).

There is, however, a problem of incompatibility between mailers because design engineers may interpret the standards differently, or because software houses may add their own functions to mailer products.

For this reason, each user has to look into the mail message contents (i.e., header, body, etc) that his/her mailer produces and rewrite a part of them so that the recipient's mailer can interpret it.

One known technique to overcome this kind of problems is to prepare the information on various attachment file formats in association with mail addresses and machine types, so as to allow the receiving server to convert the data format of a mail message according to its recipient's environment (see, for example, patent literature 1).

Also known is a mail gateway device with a function of converting attachment data by using a previously provided conversion table. In addition, this mail gateway device allows selection of whether to include file attachments, so as to reduce the amount of data (see, for example, patent literature 2).
[Patent Literature 1] Japanese Unexamined Patent Application Publication No. 11-168498 (1999)
[Patent Literature 2] Japanese Unexamined Patent Application Publication No. 11-175419 (1999)

EP-A2-0936786 discloses a multimedia mail communication system and computer-readable recording medium.

US6101320 discloses an electronic mail communication system and method.

GB-A-2405062 discloses protocol conversion via intermediate protocol with message storage and verification.

### Disclosure of the Invention

### Problems to be solved by the Invention

The foregoing conventional techniques, however, have the following problems:

For example, the techniques disclosed in patent literature 1 and 2 require prior registration of mail addresses managed by a receiving server, along with all functions made available by the same.

In addition to the above, the technique disclosed in patent literature 1 converts mail messages at each receiving server. Since such a special mail server has to be deployed for each different client, the system tends to become increasingly complex and costly.

In view of the foregoing, it is an object of the present invention to provide a program for sending and receiving mail messages while converting their elements without the need for previously registering details of conversion. It is another object of the present invention to provide a program for sending and receiving mail messages with a simple system structure.

### Means for Solving the Problems

The present invention is defined by the independent claims, to which reference should now be made. Specific embodiments are set out in the dependent claims.

### Advantages of the Invention

According to the present invention, the analysis record generating means produces an analysis record for each received mail message and stores it in the analysis record storing means, thus permitting the mailer type determining means to determine a recipient's mailer type from the stored analysis records when a specific mail message is received. A mail server having the functions of the present invention can collect analysis records, not only from messages addressed to the clients under that server, but also from every mail message that passes through the server. The analysis record storing means thus accumulates a rich collection of such analysis records, making it easier to determine a recipient mailer type, as well as ensuring proper conversion of a desired part of mail messages.

The mail processing operation of the present invention applies to every mail message passing through a mail server having the proposed functions. This means that the system is required to have only a small number of such special mail servers to serve the entire system, thus simplifying the system design.

The above and other objects, features and advantages of the present invention will become apparent from the following description when taken in conjunction with the accompanying drawings which illustrate preferred embodiments of the present invention by way of example.

### Brief Description of the Drawings

FIG. 1 is a conceptual view of the invention to be embodied.
FIG. 2 shows the structure of a mail communications system according to the present embodiment.
FIG. 3 shows a hardware configuration of a mail server according to the present embodiment.
FIG. 4 is a functional block diagram of the mail server.
FIG. 5 shows an example data structure of an analysis record table.
FIG. 6 shows an example data structure of conversion data tables.
FIG. 7 shows a custom setting screen.
FIG. 8 shows an example of header conversion.
FIG. 9 is a flowchart showing how a mail communications system operates.
FIG. 10 is a flowchart showing how a destination mailer is determined.
FIG. 11 is a flowchart showing how mail header and body elements are converted.

Best Mode for Carrying Out the Invention Preferred embodiments of the present invention will now be described in detail below with reference to the accompanying drawings.

The description begins with an overview of the invention to be embodied and then proceeds to a more specific embodiment of the invention.

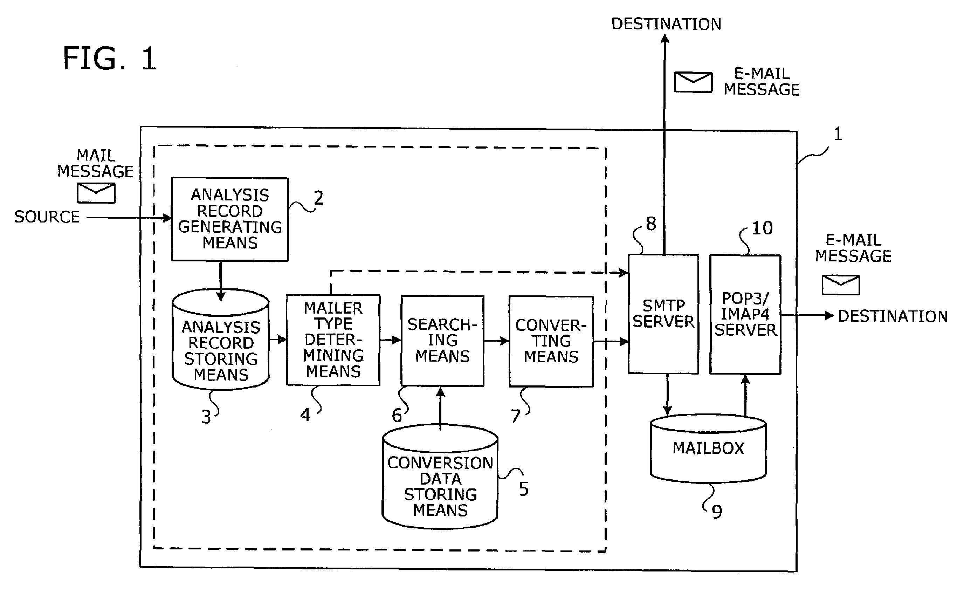

FIG. 1 is a conceptual view of the invention to be embodied.

The computer 1 shown in FIG. 1 includes the following elements: an analysis record generating means 2, an analysis record storing means 3, a mailer type determining means 4, a conversion data storing means 5, and a searching means 6, a converting means 7, an SMTP server 8 for sending mail messages, a mailbox 9 for storing mail messages received from the SMTP server 8, and a POP3/IMAP4 server 10 for receiving mail messages. SMTP stands for "Simple Mail Transfer Protocol," POP3 "Post Office Protocol 3," and IMAP4 "Internet Message Access Protocol 4."

The destination of an outgoing mail message may be (but not limited to) a client connected directly to the computer 1, or a client connected to other SMTP server via the computer 1. Such mail messages may reach the computer 1 either directly from the sending client or via other SMTP server.

The analysis record generating means 2 analyzes each received mail message to identify its sender and source mail type and generates an analysis record including an identifier of the sender as well as the source mailer type.

The analysis record storing means 3 stores such analysis records. If there is an existing entry of analysis record that the analysis record generating means 2 created in the past, the analysis record storing means 3 overwrites it with the newly created analysis record.

The mailer type determining means 4 determines a destination mailer type of the received mail message by using the identifier to consult the analysis records stored in the analysis record storing means 3. The mailer type determining means 4, however, may not always be able to determine a mailer type. If this is the case, the mailer type determining means 4 simply forwards that mail message to the SMTP server 8 for transmission.

The conversion data storing means 5 stores conversion data specifying a conversion process corresponding to each specific combination of a sender mailer type and a recipient mailer type. A conversion process is to be performed so that the recipient can identify the body text and attached data of a mail message whose form depends on the sender's mailer type.

The searching means 6 retrieves conversion data that matches with a combination of the source mailer type and destination mailer type of the received mail message. That is, the searching means 6 compares the source and destination mailer types of a given mail message with each combination of a sender mailer type and a recipient mailer type.

If a match is found for the combination, the converting means 7 converts an element of the original mail message according to the conversion process specified by the retrieved conversion data. What the converting means 7 converts may be mail header elements contained in a message or some mail body elements that can be manipulated.

The SMTP server 8, mailbox 9, and POP3/IMAP4 server 10 are known, conventional devices, the details of which will not be described here.

The computer 1 executes the above-described mailing program as follows. When a mail message arrives at the computer 1, the analysis record generating means 2 identifies its sender and source mailer type, thus generating an analysis record including the sender's identifier and mailer type. The analysis record storing means 3 stores such analysis records. The mailer type determining means 4 determines a destination mailer type of the received mail message, based on the identifiers in the stored analysis records in the analysis record storing means. The conversion data storing means 5, on the other hand, stores conversion data specifying a conversion process corresponding to each specific combination of a sender mailer type and a recipient mailer type. The searching means 6 retrieves conversion data corresponding to the combination of the sender mailer type and recipient mailer type of the received mail message. If a match is found for that combination, the converting means 7 converts an element of the original mail message according to the conversion process specified by the retrieved conversion data.

After that, the mail message is transmitted by the SMTP server 8. The SMTP server 8 sends out the message to another mail server if its destination is another SMTP server. Alternatively, the SMTP server 8 puts the message into the mailbox 9 for storage purposes in the case where the destination is a client directly connected to the computer 1. The POP3/IMAP4 server 10 retrieves such stored mail messages from the mailbox 9 upon request from the mailer at the destination client and sends them out to the destination mailer.

In the computer 1 executing the above-described computer program, the analysis record generating means 2 creates an analysis record and stores it in the analysis record storing means 3 each time a mail message arrives. The mailer type determining means 4 consults analysis records stored in the analysis record storing means 3 to determine the recipient mailer type of a received mail message. The computer 1 can therefore collect analysis records, not only from messages addressed to the POP3/IMAP4 server 10, but also from messages that go to other SMTP servers through the SMTP server 8. The analysis record storing means 3 thus accumulates a rich collection of such analysis records, making it easier to determine a recipient mailer type, as well as ensuring proper conversion of a desired element of the mail message.

The computer 1 applies the above function to every mail message passing through itself. This means that only a small number of such special mail servers can serve the entire system, thus simplifying the system design.

The following will provide a specific embodiment of the present invention.

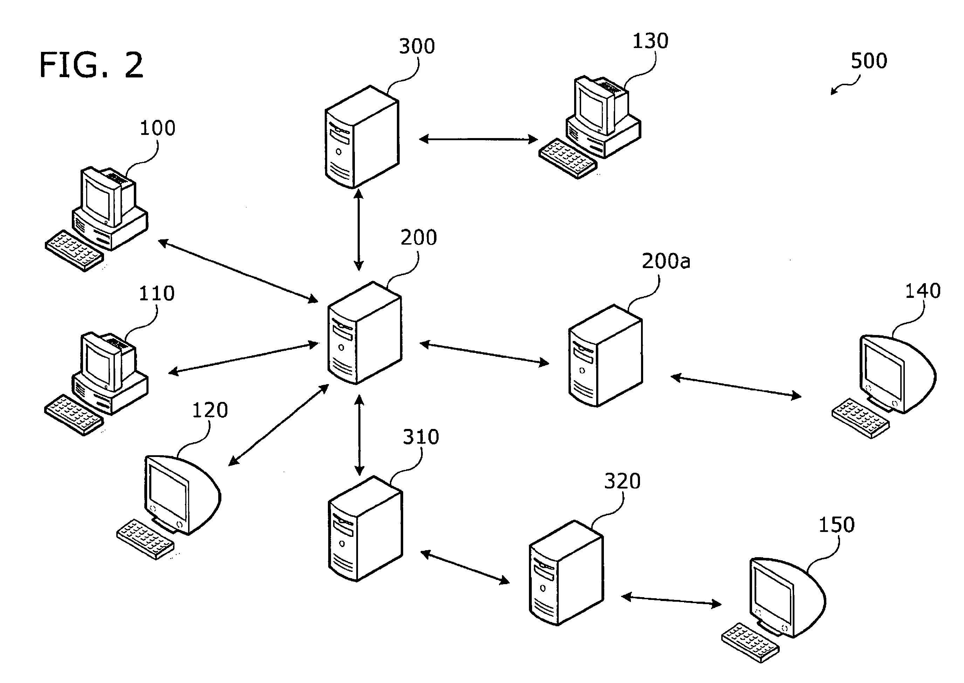

FIG. 2 shows the structure of a mail communications system according to an embodiment of the invention.

The illustrated mail communications system 500 is formed from a plurality of clients 100, 110, 120, 130, 140, and 150 and a plurality of mail servers 200, 200a, 300, 310, and 320. Each mail server 200, 200a, 300, 310, and 320 includes an SMTP server (sending server) for accenting and transmitting mail messages, a mail box storing transmitted messages, and a POP3/IMAP4 server (receiving server) for receiving mail messages.

Clients 100 to 150 are user computers. In the system of FIG. 2, clients 100, 110, and 120 are connected to the mail server 200. Client 130 is connected to the mail server 200 via another mail server 300. Client 140 is connected to the mail server 200 via yet another mail server 200a. Client 150 is connected to the mail server 200 via other mail servers 320 and 310. The mail server 200, clients 100 to 120, and mail servers 200a, 300, and 310 are connected to each other by, for example, a local area network (LAN). Such a LAN connection is also available for communication between mail server 200a and client 140, between mail server 300 and client 130, between mail servers 310 and 320, and between mail server 320 and client 150.

The clients 100 to 150 can be a source of electric mail messages. They can also be a destination of electric mail messages. The users of those clients 100 to 150 exchange electronic mail messages with each other over the network system. For example, the user of a client 100 exchanges messages with other clients 110 to 150.

The mail servers 200 and 200a are server computers with the function of converting header and body elements of a mail message upon request from the clients 100 to 150. These two mail servers 200 and 200a are different from other mail servers 300 to 320 in that the former servers have a mail converter (described later).

The mail servers 200 and 200a are identical in terms of their functions, which include forwarding of mail messages from clients 100 to 150 and other mail servers 300 to 320.

Suppose, for example, that the client 100 has originated a mail message. This message is accepted by the mail server 200. The mail server 200 then determines which of the other mail servers 200a, 300, 310, and 320 is serving the recipient user's network and forwards the mail message to that server.

Suppose now that the client 100 is to receive mail messages. In this case, the client 100 calls up a POP3/IMAP4 server running on the mail server 200 and requests it to transfer mail messages received by an SMTP server running on the mail server 200.

Those mail servers 200 and 200a are implemented on a hardware platform described below.

The following description focuses on the mail server 200 as a representative of its peer group.

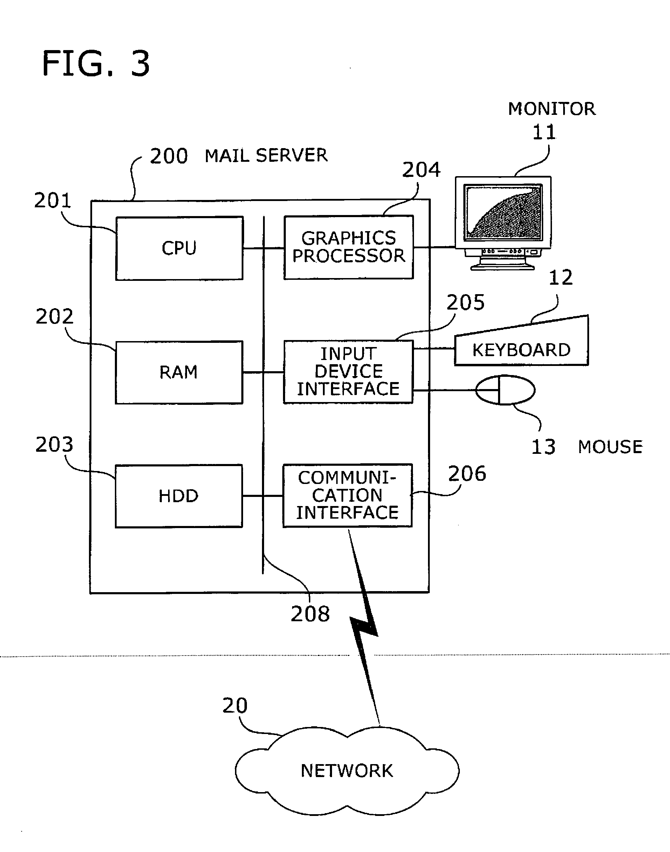

FIG. 3 shows a hardware configuration of a mail server according to the present embodiment.

The entirety of this mail server 200 is controlled by a central processing unit (CPU) 201. Connected to the CPU 201 via a bus 208 are: a random access memory (RAM) 202, a hard disk drive (HDD) 203, a graphics processor 204, an input device interface 205, and a communication interface 206.

The RAM 202 serves as temporary storage for the whole or part of operating system (OS) programs and application programs that the CPU 201 executes, in addition to other various data objects manipulated at runtime. The HDD 203 stores operating system programs and various application programs.

The graphics processor 204 is coupled to a monitor 11. The graphics processor 204 produces video images in accordance with commands from the CPU 201 and displays them on a screen of the monitor 11. Coupled to the input device interface 205 are a keyboard 12 and a mouse 13. The input device interface 205 receives signals from the keyboard 12 and mouse 13 and supplies them to the CPU 201 via the bus 208.

The communication interface 206 is connected to a network 20, allowing the CPU 201 to exchange data with other computers on the network 20.

The above computer hardware serves as a platform for realizing the processing functions of the present embodiment.

The following section will now describe program modules that constitute the mail servers 200 and 200a.

The term "program module" refers to a collection of specific instructions that the mail servers 200 and 200a are supposed to execute. The mail servers 200 and 200a provide specific functions according to such program modules. The following description focuses on the mail server 200 as a representative of its peer group.

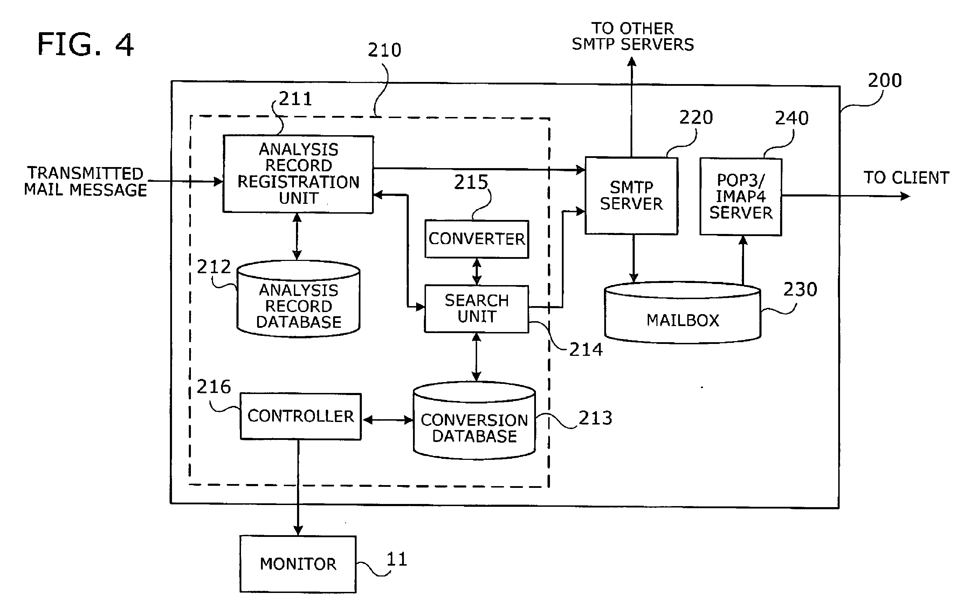

FIG. 4 is a functional block diagram of a mail server.

The illustrated mail server 200 includes a mail converter 210, an SMTP server 220, a mailbox 230, and a POP3/IMAP4 server 240.

The mail converter 210 receives mail messages transmitted with SMTP protocols. The sources of such mail messages include: clients 100 to 120; client 130 via mail server 300; client 140 vial mail server 200a; and client 150 via mail servers 320 and 310. The role of the mail converter 210 is to convert a transmitted mail message, as necessary, into an optimal form so that the destination mailer can accept the mail contents, before the message is passed to the SMTP server 220. To this end, the mail converter 210 includes the following elements: an analysis record registration unit 211, an analysis record database 212, a conversion database 213, a search unit 214, a converter 215, and a controller 216.

The analysis record registration unit 211 analyzes a transmitted mail message to identify its mailer type, as well as the information for identifying the user. The latter information includes, for example, source mail address, host name, mail body, and transmission date. The analysis record registration unit 211 enters the results of this analysis to the analysis record database 212 as a new entry of analysis record.

The analysis record registration unit 211 also checks the presence of a conversion flag in the transmitted mail message, as well as its state if such a flag is found. If no conversion flag is found, or if the found flag is in the OFF state, then the analysis record registration unit 211 attempts to determine a destination mailer type of the mail message. If the destination mailer type is determined successfully, the analysis record registration unit 211 commands the search unit 214 to perform a search. If the conversion flag is in the ON state, or if it is unable to determine the destination mailer type, the analysis record registration unit 211 simply forwards the transmitted mail message to the SMTP server 220. A later section will be dedicated to describe the conversion flag in detail.

The analysis record database 212 has an analysis record table 212a to store the analysis records produced by the analysis record registration unit 211.

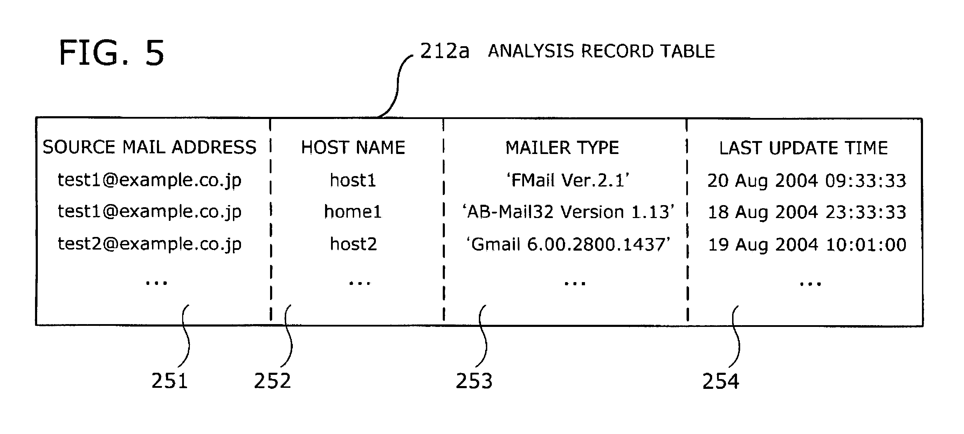

FIG. 5 shows an example data structure of an analysis record table.

The illustrated analysis record table 212a stores analysis records in table form, each entry being associated with a specific transmitted mail message. The analysis record table 212a has the following data fields: field 251 for source mail address, field 252 for host name, field 253 for mailer type, and field 254 for last update time. A set of associated data fields on each row of this table constitutes a single record representing properties of a specific user.

The field 251 contains the sender's mail address found in a transmitted mail message.

The field 252 contains a host name identifying the sender's terminal device. If no host name is found, the field 252 contains the sender's IP address instead.

The field 253 indicates the sender's mailer type.

The field 254 indicates the time when the analysis record was added as a new entry of the table, or when a previous record was overwritten with the present record.

The entries of the analysis record table 212a are updated by the analysis record registration unit 211 each time a newly transmitted mail message arrives. The update operation may actually be addition of a new entry or overwriting of an existing entry. For example, a new analysis record entry will be added to the analysis record table 212a when a mail message with a mailer type other than "FmailVer.2.1" is received even if its mail address is "test1@example.co.jp" and its host name is "host1." Another case of an additional entry is where the transmitted mail message has a new host name. A new entry is produced from such a message even if its sender mail address and mailer type match with those of an existing table entry.

Reference is now made to FIG. 4 again.

The conversion database 213 has conversion data tables 213a that defines conversion rules for each different mailer type. More specifically, the conversion data tables 213a provide information specifying which mail headers should be included in a mail message. The conversion data tables 213a also provide information describing what kinds of mail body elements can be handled by a particular mailer.

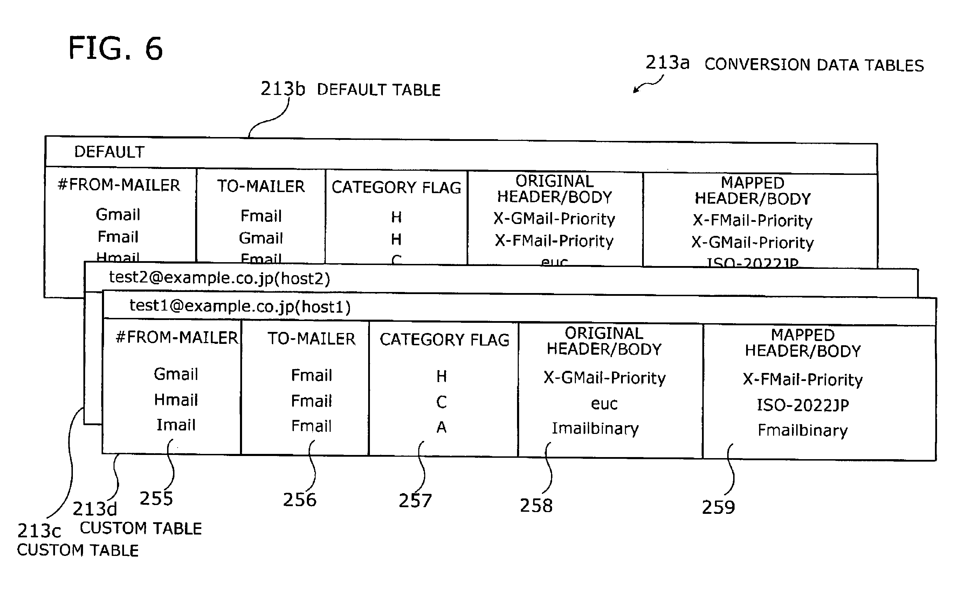

FIG. 6 shows an example data structure of conversion data tables.

Specifically, one of the illustrated conversion data tables 213a is a default table 213b previously defined as an initial setup. The others are custom tables 213c and 213d produced by a custom table creation process (described later). One custom table 213c has been created as a table dedicated for a mail address "test2@example.co.jp" and a host name "host2." The other custom table 213d has been created as a table dedicated for another mail address "testl@example.co.jp" and another host name "host1." As these examples show, the custom tables 213c and 213d are each prepared for a specific combination of mail address and host name.

The following section will describe the structure of those conversion data tables 213a. Since the default table 213b and custom tables 213c and 213d are all in the same format, the description will focus on the custom table 213d as a representative of those tables.

The custom table 213d has the following data fields: field 255 for sender mailer type, field 256 for recipient mailer type, field 257 for object flag, field 258 for original header/body elements, and field 259 for mapped header/body elements. A set of associated data fields on each row constitutes a single table entry.

The field 255 contains an original mailer type (#From-Mailer).

The field 256 contains a target mailer type (To-Mailer).

The field 257 contains a flag (category flag) indicating which part of an original mail message is to be subjected to a conversion. The flag may take one of the following values: 'H' indicating that a mail header element is to be converted, 'C' indicating that a mail body element is to be converted, or 'A' indicating that a file attachment is to be converted. In this way, the conversion data tables 213a classify the data to be converted into the following categories: mail header elements, mail body elements, and file attachments.

The field 258 specifies an original header or body element that has to be converted.

The field 259 specifies a mapped header or body element into which the original header or body element has to be converted.

Reference is now made to FIG. 4 again.

In response to a search request from the analysis record registration unit 211, the search unit 214 searches the conversion data tables 213a stored in the conversion database 213, based on the found destination mail address and host name, thereby determining which conversion data table to use. Specifically, the search unit 214 searches a custom table 213c or 213d if its mail address and host name match with the found destination mail address and host name. If no such custom tables are present, the search unit 214 searches the default table 213b instead. If the table being searched contains an entry whose From-Mailer and To-Mailer fields match respectively with the source mailer type and destination mailer type of the received mail message, the search unit 214 commands the converter 215 to convert the specified header or body element of the message in the way specified in that table entry.

The search unit 214 receives a converted version of the mail message from the converter 215. Upon receipt of the converted mail message, the search unit 214 forwards that message to the SMTP server 220, with a conversion flag set to the ON state.

The converter 215 converts the specified header or body element upon receipt of a conversion command from the search unit 214, thus producing a mail message with a mapped header element or a mapped body element. The converter 215 then sends the converted version of the mail message back to the search unit 214.

The controller 216 displays the default table 213b or custom tables 213c and 213d on a screen of the monitor 11 when requested by the user. Also the controller 216 outputs a custom setting screen on the monitor 11 during the course of creating a custom table. Through the keyboard 12 and mouse 13, the user may specify desired conditions for converting mail header or body elements. The controller 216 produces a new custom table for the specified conversion conditions and overwrites (updates) the existing conversion data table 213a with the new table.

The SMTP server 220 forwards mail messages from clients 100 to 120 or other mail servers toward their respective destinations. If the destination of a mail message is one of the clients 130 to 150, then the SMTP server 220 sends that message to an SMTP server running on the corresponding mail server 200a, 300, 310, or 320, which lies on the way to the destination. If the destination of a mail message is among the clients 100 to 120 themselves, the SMTP server 220 puts the message into the mailbox 230.

The mailbox 230 stores such mail messages supplied from the SMTP server 220.

The POP3/IMAP4 server 240 provides mail reception services upon request from the client 100 to 120. Specifically, the POP3/IMAP4 server 240 outputs stored mail messages to a mailer of the requesting client.

The following section will describe how a custom table is created.

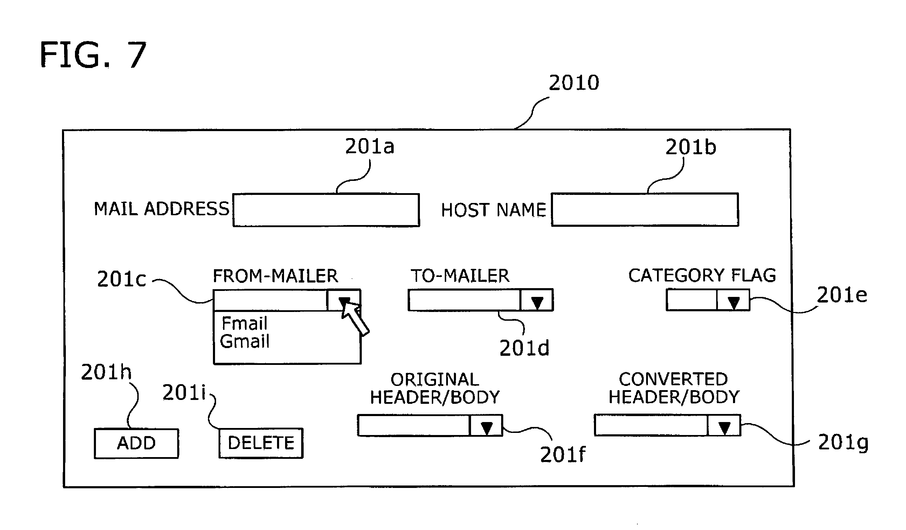

FIG. 7 shows a custom setting screen.

The illustrated custom setting screen 2010 is formed from the following components: a mail address input box 201a for entering a mail address, a host name input box 201b for entering a host name, a selection button 201c for selecting From-Mailer, a selection button 201d for selecting To-Mailer, a selection button 201e for selecting a category flag, a selection button 201f for selecting a header or body element to be converted, a selection button 201g for selecting into what form the selected header or body element should be converted, an ADD button 201h, and a DELETE button 201i.

Suppose, for example, that the user has pressed the selection button 201d with a mouse 13 or other input device. This action causes the custom setting screen 2010 to show a previously defined list of mailer types. The user then selects one of the choices presented, thereby setting that item.

The user is also allowed to directly type in a piece of text to specify the mail address or other items. The ADD button 201h or DELETE button 201i permits the user to finalize the entered items, so as to define an appropriate conversion rule for a specific destination mail address.

The following section will describe what is contained in a mail header, as well as an example of header conversion.

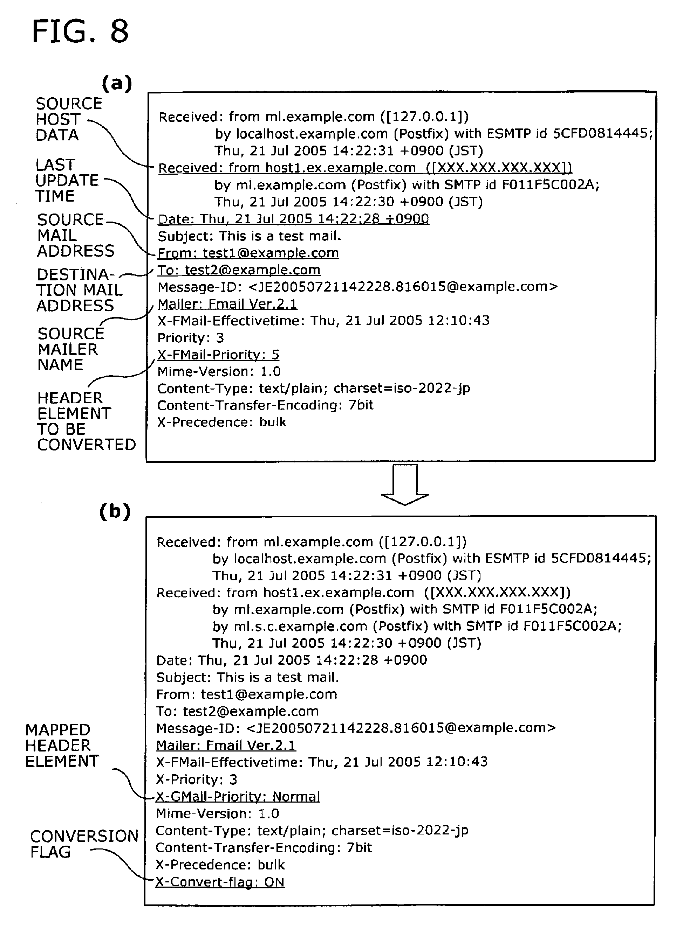

FIG. 8 shows an example of header conversion.

Specifically, FIG. 8 (a) shows the original header of a transmitted mail message, while FIG. 8(b) shows a converted version of the same. Some portions of those examples are underlined for easy understanding of what is being discussed.

The header shown in FIG. 8(a) includes, among others, a header element to be converted, along with source host data, source mail address, destination mail address, and source mailer name.

The original header includes an element "X-FMail-Priority: 5" added by the source mailer Fmail to indicate priority of the mail message. This mail message is subjected to the mail converter 210. The resulting header element (mapped header element) reads "X-GMail-Priority: Normal" which indicates the same priority as originally defined by mailer Fmail, but now in the form that the destination mailer GMail can parse. The mail converter 210 has also appended a conversion flag "X-Convert-flag: ON" at the end of the header.

In the way described above, the original header element produced by a source mailer is converted to an equivalent element that is compatible with a destination mailer type. The present invention thus makes it possible for different mailers to communicate message priority information correctly.

The following section will now describe how the mail communications system 500 operates.

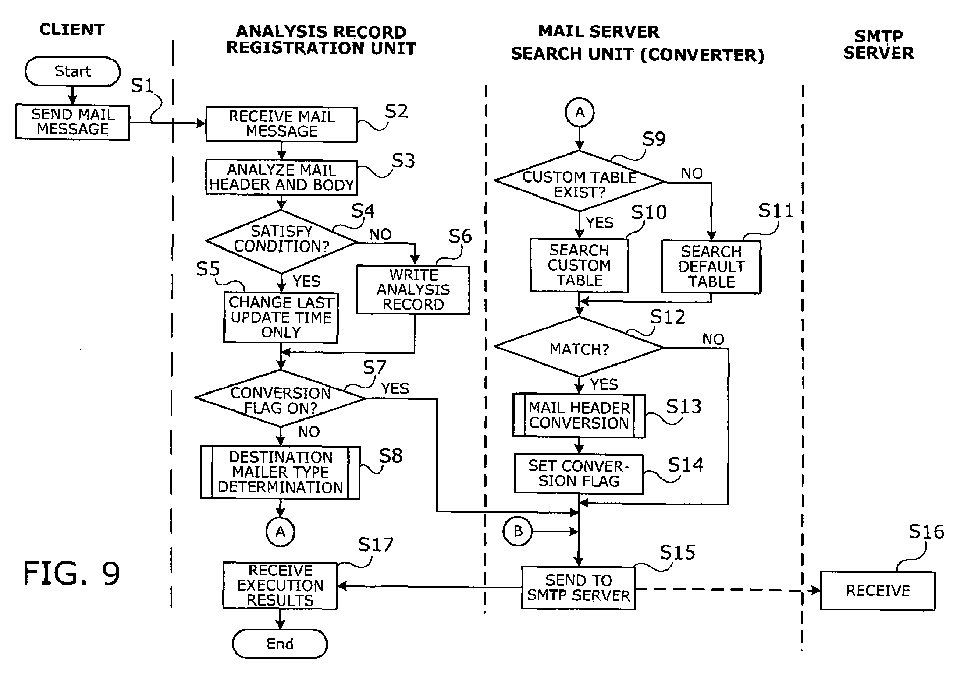

FIG. 9 is a flowchart showing how a mail communications system operates.

The following explanation assumes that one client 100 sends a mail message to another client 130.

The client 100 compiles a mail message and transmits it to the server 200 (step S1).

The transmitted mail message reaches the analysis record registration unit 211 (step S2). The analysis record registration unit 211 analyzes the message to identify its header and body elements (step S3).

The analysis record registration unit 211 searches the analysis record table 212a to determine whether the sender mail address, sender host name, and sender mailer type are registered therein (or to determine whether they satisfy predetermined conditions). That is, the analysis record registration unit 211 determines whether there is an existing entry for a combination of mail address, host name, and mailer type (step S4).

If such a table entry is found (i.e., if yes at step S4), the analysis record registration unit 211 changes its last update time field (step S5) before going to step S7. If there are no such entries (i.e., if no at step S4), the analysis record registration unit 211 adds a new analysis record in the analysis record table 212a (step S6) before going to step S7.

Subsequently the analysis record registration unit 211 determines whether the mail header has a conversion flag that is set to ON (step S7). If the conversion flag is ON (i.e., if yes at step S7), the process advances to step S15. If the conversion flag is OFF (i.e., if no at step S7), the process calls a routine of destination mailer type determination (step S8). When this destination mailer type determination routine returns a specific destination mailer type, the process then advances to step S9.

The search unit 214 now determines whether the conversion database 213 contains a custom table whose mail address and host name match with the destination mail address and host name (step S9). If such a custom table is found (i.e., if yes at step S9), the search unit 214 searches that custom table (step S10). If no such custom table is found (i.e., if no at step S9), the search unit 214 searches a default table 213b (step S11).

The search unit 214 determines whether the combination of source and destination mailer types matches with each combination of From-Mailer and To-Mailer in the table selected at step S10 or S11 (step S12). If no match is found (i.e., if no at step S12), the process skips to step S15. If a match is found (i.e., if yes at step S12), the search unit 214 commands the converter 215 to convert the specified header or body element.

The converter 215 then converts the specified header or body element and sends the converted mail message back to the search unit 214 (step S13).

The search unit 214 modifies the converted mail message to add a conversion flag with a value of "ON" (step S14).

The search unit 214 passes the converted mail message to the SMTP server 220 (step S15). The SMTP server 220 receives this converted mail message (step S16) and forwards it to an SMTP server running on the mail server 300.

The search unit 214 also returns the execution results to the analysis record registration unit 211 after the converted mail message is passed to the SMTP server 220.

The analysis record registration unit 211 then receives the execution results (step S17).

This concludes the mail conversion process.

The mail server 300 transfers the converted mail message to its client 130 upon receipt of a mail reception request from the client 130.

The following section will now provide details of how the routine called at step S8 of FIG. 9 determines a destination mailer from a source mail address.

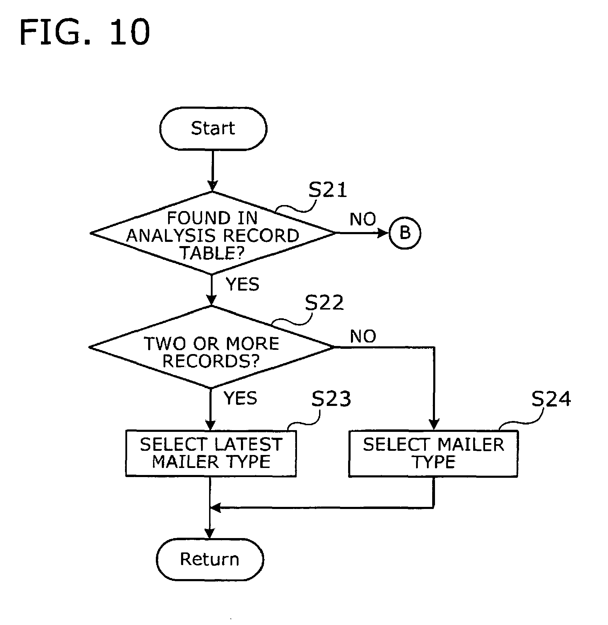

FIG. 10 is a flowchart showing how a destination mailer is determined.

The analysis record registration unit 211 first searches the analysis record table 212a to find whether there exists a source mail address that matches with the given destination mail address (step S21). If no such source mail address is found in the analysis record table 212a (i.e., if no at step S21), the process goes to step S15. If the analysis record table 212a has a record containing such a source mail address (i.e., if yes at step S21), the analysis record registration unit 211 then determines whether there are two or more records containing that source mail address (step S22). If there are two or more such records (i.e., if yes at step S22), the analysis record registration unit 211 takes a latest mailer type value from the analysis record having the latest last update time (step S23) before moving to step S9 of FIG. 9. If, on the other hand, only one record is found for that source mail address (i.e., if no at step S23), then the analysis record registration unit 211 selects the mailer type value of that only analysis record (step S24) before moving to step S9 of FIG. 9.

The following section will now provide details of how the routine called at step S13 of FIG. 9 converts mail header and body elements.

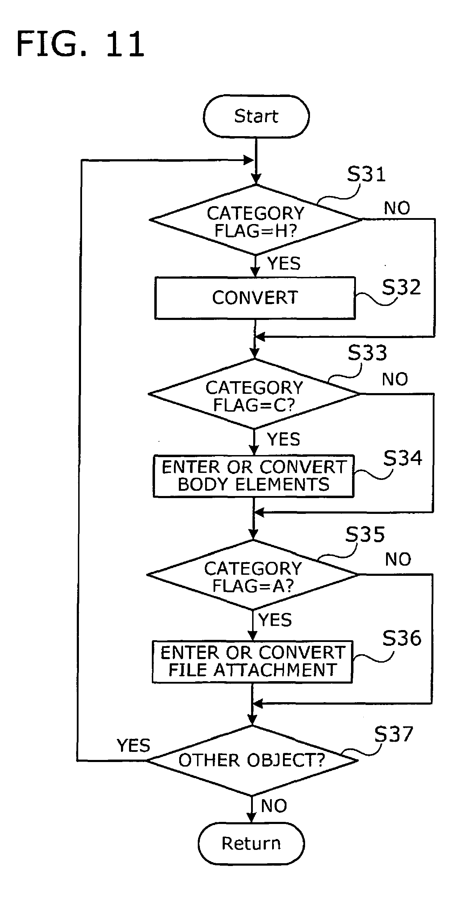

FIG. 11 is a flowchart showing how mail header and body elements are converted.

The process begins with a decision of the search unit 214 as to whether the category flag is set to 'H' (step S31).

If the category flag is 'H' (i.e., if yes at step S31), the converter 215 converts a specified header element (step S32).

If the category flag is not 'H' (i.e., if no at step S31), the process skips to step S33.

The search unit 214 then determines whether the category flag is 'C' (step S33). If the category flag is 'C' (i.e., if yes at step S33), the converter 215 converts a specified mail body element (step S34). If the category flag is not 'C' (i.e., if no at step S33), the process skips to step S35.

The search unit 214 then determines whether the category flag is 'A' (step S35). If the category flag is 'A' (i.e., if yes at step S35), the converter 215 converts a file attachment (step S36). If the category flag is not 'A' (i.e., if no at step S35), the process skips to step S37.

After the above processing is done, it is determined whether any other objects are waiting conversion (step S37). If there is an object that matches with the conversion rules (i.e., if yes at step S37), the process goes back to step S31 and repeats the subsequent steps. If there are no more objects to convert (i.e., if no at step S37), then the process returns to step S14 of FIG. 9.

As can be seen from the above description of the mail communications system 500, the mail server 200(200a) activates its analysis record registration unit 211 when it receives a mail message from, for example, one client 140 to anther client 100, or when it forwards a mail message from one client 130 to another client 150. Specifically, the analysis record registration unit 211 adds a new record (or overwrites an existing record with a new record) including the message's mailer type and mail address, and host name to an analysis record table 212a and saves the analysis record table 212a in the analysis record database 212. Afterwards, the client 100 may send a mail message to another client 140, for example. In this case, the analysis record table 212a helps the mail server 200 find mailer information of the client 140, thus making it possible to convert a desired portion of the message properly.

Clients can send and receive a mail message and file attachments without the need for knowing which mailer the recipient is using.

The analysis record table 212a gains a new record of mailer type, mail address, and host name of every first mail message exchanged between clients 100 to 150 when that message passes through the mail server 200 (or 200a). Such records stored in the analysis record table 212a permit the mail server 200 to determine the destination mailer type of each mail message transmitted or received for the second time or later. This feature enables the proposed mail server 200 to have a wider coverage of target clients than that of, for example, a conventional server only capable of checking and converting mail messages of its own clients. It is therefore possible to simplify the design of a mail communications system 500.

Suppose now that one client 100 uses Macintosh^{™} as its operating system (OS) while another client 140 uses Windows^{™} as its OS. In the case where the client 100 creates and sends a mail message with an attachment of data compressed in the MacBinary format, the mail server 200 analyzes the received mail message and extracts therefrom the MacBinary data. The converter 215 then locally decodes the data and recompresses it into another form compatible with the mailer type of the destination client, before the mail message is transferred from the SMTP server 220 to another mail server 200a. Upon receipt of this message, the mail server 200a activates the analysis record registration unit to analyze the message and update its own analysis record database with the analysis result. The analysis record registration unit then finds that the message has a conversion flag set to the ON state, and thus it simply forwards the message, without conversion, to an SMTP server running on the mail server 200a. The SMTP server saves the mail message in a mail box in the mail server 200a, so that a POP3/IMAP4 server in the same mail server 200a will read and transfer the message from the mail box to the destination client 140 upon request. Finally the client 140 receives the mail message.

Accordingly the Windows^{™}-based client 140 can recognize and manipulate the attachment of the received message, despite the fact that the attachment has originally been in the form of MacBinary. Since the mail server 200a does not have to convert the message when passing it to its local SMTP server, the analysis record registration unit in the mail server 200a can transfer the message quickly.

When the user specifies conditions for converting mail header and body elements by using a keyboard 12 and mouse 13, the controller 216 saves the specified conversion conditions in a conversion database 213. The user can define a mail format and file format suitable for a new mailer type that the destination client may use. The user can also delete obsolete entries in the conversion database 213. These features of the controller 216 make it possible to optimize the conversion rules for each different mailer type that clients may use.

In the case where there are two or more analysis records for a single source mail address, the analysis record registration unit 211 chooses a record with a latest update time to determine the mailer type. It is therefore possible to convert a mail message correctly even if its destination mail address may correspond to several different mailers, terminal devices, or the like.

The conversion data tables 213a include custom tables 213c and 213d dedicated for each particular combination of destination mail address and host name. This feature improves the accuracy of search results that the search unit 214 produces, thus permitting the converter 215 to rewrite message contents more reliably.

Further, the present embodiment adds a conversion flag to a mail message, which enables the mail servers 200 and 200a to determine whether the mail message has already been converted, thereby avoiding duplicated conversion easily and certainly. This feature reduces the workload of mail servers 200 and 200a, as well as enhancing the efficiency of mail communication.

The addition of a conversion flag is implemented as part of the conversion process. This ensures the avoidance of duplicated conversion.

While the above-described embodiment is designed to store mail data in table form, the present invention should not be limited to that specific implementation.

Further, the present invention can be applied to various mailers, including, but not limited to, UNIX^{™}-based mailers. If this is the case, the present invention may be adapted to extract the charset parameter from Content-Type header and convert the character code to the one that the recipient mailer can handle. Suppose, for example, that the character code information of a given mail message specifies "eucjp" as a charset parameter value, implying that the message is originated by a UNIX^{™}-based mailer. In this case, the mail server first decodes the MIME-encoded data, converts the result to a specified code, and then encrypts the data again, thus allowing a Windows^{™}-based mailer to parse the message.

The preceding sections have described the proposed program, method, and apparatus for sending and receiving mail messages, based on the specific embodiments illustrated in the accompanying drawings. The present invention, however, should not be limited to the above-described programs or devices. Each element of those programs and devices may be replaced with an equivalent element that performs essentially the same function. The present invention also allows any other structural elements or processing steps to be added to the above-described devices or programs.

Lastly, any combinations of elements or features of the foregoing embodiments will also fall within the scope of the present invention.

The above-described processing functions of the present invention are actually implemented on a computer system. Specific functions of mail servers 200 and 200a are coded and made available in the form of computer programs. A computer system executes such programs to provide the above-described processing functions. The programs may be stored in a computer-readable medium. Suitable computer-readable storage media include magnetic storage devices, optical discs, magneto-optical storage media, and semiconductor memory devices, for example. Magnetic storage devices include hard disk drives (HDD), flexible disks (FD), and magnetic tapes (MT), for example. Optical discs include digital versatile discs (DVD), DVD-RAM, compact disc read-only memory (CD-ROM), CD-Recordable (CD-R), and CD-Rewritable (CD-RW), for example. Magneto-optical storage media include magneto-optical discs (MO), for example.

Portable storage media, such as DVD and CD-ROM, are suitable for distribution of program products. Network-based distribution of software programs may also be possible, in which case the program files are made available on a server computer for downloading to other computers via a network.

A computer stores mail communication programs in its local storage unit, which have previously been installed from a portable storage media or downloaded from a server computer. The computer executes those programs read out of the local storage unit, thereby performing the programmed functions. As an alternative way of program execution, the computer may execute programs, reading out program codes directly from a portable storage medium. Another alternative method is that the user computer dynamically downloads programs from a server computer when they are demanded and executes them upon delivery.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

1: computer
2: analysis record generating means
3: analysis record storing means
4: mailer type determining means
5: conversion data storing means
6: searching means
7: converting means
100, 110, 120, 130, 140, 150: clients
200, 200a: mail servers
210: mail converter
211: analysis record registration unit
212: analysis record database
213: conversion database
214: search unit
215: converter
216: controller
300, 310, 320: mail servers
500: mail communications system

## Claims

1. A program for sending and receiving electronic mail messages, the program being configured to cause a computer to function as:
analysis record generating means (2) for analyzing each received mail message to identify a sender and a source mailer type thereof and generating an analysis record including an identifier of the sender as well as the source mailer type, wherein the generated analysis record includes the source mailer type being one among a plurality of different mailer types;
analysis record storing means (3) for storing the analysis records;
mailer type determining means (4) for determining a destination mailer type of a specific received mail message, based on the identifier included in each analysis record stored in the analysis record storing means;
conversion data storing means (5) for storing conversion data specifying conversion processes corresponding to specific combinations of each said source mailer type and a destination mailer type;
searching means (6) for retrieving conversion data that matches with a combination of the source mailer type and destination mailer type of the specific received mail message; and
converting means (7) for converting an element of the original specific received mail message according to a conversion process described by the retrieved conversion data if a match is found for the combination,
**characterised in that**:
the analysis record generating means (2) is operable to examine a flag in received mail messages to determine whether a conversion has to be performed;
the converting means (7) is operable to perform the conversion only if the analysis record generating means (2) has determined that a conversion has to be performed; and
the program is configured to append the flag to a mail message when the converting means has performed the conversion on that mail message.

2. The program according to claim 1, wherein:
the identifying information comprises mail address information collected as source mail addresses; and
the mailer type determining means determines the destination mailer type by searching for the mail address information.

3. The program according to claim 1, wherein:
the analysis records each comprises last update time information; and
when there are a plurality of mailer types corresponding to the same identifier, the mailer type determining means chooses a latest mailer type as the destination mailer type by consulting the last update time information.

4. The program according to claim 1, wherein:
the conversion data is provided for each of a plurality of recipients, each conversion data having an identifier representing a specific recipient; and
the converting means performs the conversion based on the conversion data having a recipient's identifier corresponding to the identifier of the destination.

5. The program according to claim 4, wherein:
the identifier comprises a source host name; and
the conversion data is provided for each specific source host name.

6. The program according to claim 1, wherein the conversion process is specified for each of header, body, and file attachment.

7. A method, executed on a computer, of sending and receiving electronic mail messages, comprising the steps of:
analyzing (S3) each received mail message to identify a sender and a source mailer type thereof and generating (S5, S6) an analysis record including an identifier of the sender as well as the source mailer type, wherein the generated analysis record includes the source mailer type being one among a plurality of different mailer types;
storing (S5, S6) the analysis records;
determining (S8) a destination mailer type of a specific received mail message, based on the identifiers included in the stored analysis records;
storing conversion data specifying conversion processes corresponding to specific combinations of each said source mailer type and a destination mailer type;
retrieving (S9, S10, S11, S12) conversion data that matches with a combination of the source mailer type and destination mailer type of the specific received mail message; and
converting (S13) an element of the original specific received mail message according to the conversion process if a match is found for the combination,
wherein the method is **characterised by**:
examining a flag in received mail messages to determine whether a conversion has to be performed;
performing the conversion only if it has been determined that a conversion has to be performed; and
appending the flag to a mail message when said conversion has been performed on that mail message.

8. An apparatus (1) for sending and receiving electronic mail messages, comprising:
analysis record generating means (2) for analyzing each received mail message to identify a sender and a source mailer type thereof and generating an analysis record including an identifier of the sender as well as the source mailer type, wherein the generated analysis record includes the source mailer type being one among a plurality of different mailer types;
analysis record storing means (3) for storing the analysis records;
mailer type determining means (4) for determining a destination mailer type of a specific received mail message, based on the identifier included in each analysis record stored in the analysis record storing means;
conversion data storing means (5) for storing conversion data specifying conversion processes corresponding to specific combinations of each said source mailer type and a destination mailer type;
searching means (6) for retrieving conversion data that matches with a combination of the source mailer type and destination mailer type of the specific received mail message; and
converting means (7) for converting an element of the original specific received mail message according to a conversion process described by the retrieved conversion data if a match is found for the combination,
**characterised in that**:
the analysis record generating means is operable to examine a flag in received mail messages to determine whether a conversion has to be performed;
the converting means is operable to perform the conversion only if the analysis record generating means has determined that a conversion has to be performed; and
the apparatus is configured to append the flag to a mail message when the converting means has performed the conversion on that mail message.

9. A computer-readable storage medium storing a program as claimed in any of claims 1 to 6.

## Patentansprüche

1. Programm zum Senden und Empfangen von E-Mail-Nachrichten, wobei das Programm so konfiguriert ist, dass es einen Computer veranlasst, zu fungieren als:
Analyseberichterzeugungsmittel (2) zum Analysieren jeder empfangenen Mailnachricht, um einen Sender und einen Ursprungsmailer-Typ davon zu identifizieren und einen Analysebericht zu erzeugen, der eine Kennung des Senders sowie des Ursprungsmailer-Typs umfasst, wobei der erzeugte Analysebericht den Ursprungsmailer-Typ umfasst, der einer unter einer Mehrzahl von verschiedenen Mailertypen ist;
Analyseberichtspeichermittel (3) zum Speichern der Analyseberichte;
Mailertyp-Bestimmungsmittel (4) zum Bestimmen eines Zielmailer-Typs einer spezifischen empfangenen Mailnachricht basierend auf der Kennung, die in jedem Analysebericht enthalten ist, der im Analyseberichtspeichermittel gespeichert ist;
Konvertierungsdatenspeichermittel (5) zum Speichern von Konvertierungsdaten, die Konvertierungsprozesse spezifizieren, die spezifischen Kombinationen jedes Ursprungsmailer-Typs und eines Zielmailer-Typs entsprechen;
Suchmittel (6) zum Abrufen von Konvertierungsdaten, die mit einer Kombination des Ursprungsmailer-Typs und Zielmailer-Typs der spezifischen empfangenen Mailnachricht übereinstimmen; und
Konvertierungsmittel (7) zum Konvertieren eines Elements der spezifischen empfangenen Original-Mailnachricht gemäß einem Konvertierungsprozess, der durch die abgerufenen Konvertierungsdaten beschrieben wird, wenn eine Übereinstimmung für die Kombination gefunden wird,
**dadurch gekennzeichnet, dass**:
das Analyseberichterzeugungsmittel (2) so betrieben werden kann, dass es ein Flag in empfangenen Mailnachrichten überprüft, um zu bestimmen, ob eine Konvertierung durchzuführen ist;
das Konvertierungsmittel (7) so betrieben werden kann, dass es die Konvertierung nur dann durchführt, wenn das Analyseberichterzeugungsmittel (2) bestimmt hat, dass eine Konvertierung durchzuführen ist; und
das Programm so konfiguriert ist, dass es das Flag an eine Mailnachricht anhängt, wenn das Konvertierungsmittel die Konvertierung an dieser Mailnachricht durchgeführt hat.

2. Programm nach Anspruch 1, wobei:
die Identifikationsinformationen Mail-Adressinformationen umfassen, die als Ursprungs-Mailadressen gesammelt werden; und
das Mailertyp-Bestimmungsmittel den Zielmailer-Typ durch Suchen nach den Mail-Adressinformationen bestimmt.

3. Programm nach Anspruch 1, wobei:
die Analyseberichte jeweils Informationen über den Zeitpunkt der letzten Aktualisierung umfassen; und
das Mailertyp-Bestimmungsmittel, wenn es eine Mehrzahl von Mailern gibt, die der gleichen Kennung entsprechen, einen letzten Mailertyp durch Konsultieren der Informationen über den Zeitpunkt der letzten Aktualisierung als den Zielmailer-Typ wählt.

4. Programm nach Anspruch 1, wobei:
die Konvertierungsdaten für jeden einer Mehrzahl von Empfängern bereitgestellt werden, wobei alle Konvertierungsdaten eine Kennung aufweisen, die einen spezifischen Empfänger repräsentiert; und
das Konvertierungsmittel die Konvertierung basierend auf den Konvertierungsdaten mit einer Empfängerkennung durchführt, die der Kennung des Ziels entspricht.

5. Programm nach Anspruch 4, wobei:
die Kennung einen Ursprungshost-Namen umfasst; und
die Konvertierungsdaten für jeden spezifischen Ursprungshost-Namen bereitgestellt werden.

6. Programm nach Anspruch 1, wobei:
der Konvertierungsprozess für jedes von Kopfzeile, Textfeld und Dateianhang spezifiziert ist.

7. Verfahren zum Senden und Empfangen von E-MailNachrichten, das auf einem Computer ausgeführt wird, umfassend die folgenden Schritte:
Analysieren (S3) jeder empfangenen Mailnachricht, um einen Sender und einen Ursprungsmailer-Typ davon zu identifizieren und einen Analysebericht zu erzeugen (S5, S6), der eine Kennung des Senders sowie des Ursprungsmailer-Typs umfasst, wobei der erzeugte Analysebericht den Ursprungsmailer-Typ umfasst, der einer unter einer Mehrzahl von verschiedenen Mailertypen ist;
Speichern (S5, S6) der Analyseberichte;
Bestimmen (S8) eines Zielmailer-Typs einer spezifischen empfangenen Mailnachricht basierend auf den Kennungen, die in den gespeicherten Analyseberichten enthalten sind;
Speichern von Konvertierungsdaten, die Konvertierungsprozesse spezifizieren, die spezifischen Kombinationen jedes Ursprungsmailer-Typs und eines Zielmailer-Typs entsprechen;
Abrufen (S9, S10, S11, S12) von Konvertierungsdaten, die mit einer Kombination des Ursprungsmailer-Typs und Zielmailer-Typs der spezifischen empfangenen Mailnachricht übereinstimmen; und
Konvertieren eines Elements der spezifischen empfangenen Original-Mailnachricht gemäß dem Konvertierungsprozess, wenn eine Übereinstimmung für die Kombination gefunden wird,
wobei das Verfahren **gekennzeichnet ist durch**:
Überprüfen eines Flags in empfangenen Mailnachrichten, um zu bestimmen, ob eine Konvertierung durchzuführen ist;
Durchführen der Konvertierung nur dann, wenn bestimmt wurde, dass eine Konvertierung durchzuführen ist; und
Anhängen des Flags an eine Mailnachricht, wenn die Konvertierung an dieser Mailnachricht durchgeführt wurde.

8. Vorrichtung (1) zum Senden und Empfangen von E-MailNachrichten, umfassend:
Analyseberichterzeugungsmittel (2) zum Analysieren jeder empfangenen Mailnachricht, um einen Sender und einen Ursprungsmailer-Typ davon zu identifizieren und einen Analysebericht zu erzeugen, der eine Kennung des Senders sowie des Ursprungsmailer-Typs umfasst, wobei der erzeugte Analysebericht den Ursprungsmailer-Typ umfasst, der einer unter einer Mehrzahl von verschiedenen Mailertypen ist;
Analyseberichtspeichermittel (3) zum Speichern der Analyseberichte;
Mailertyp-Bestimmungsmittel (4) zum Bestimmen eines Zielmailer-Typs einer spezifischen empfangenen Mailnachricht basierend auf der Kennung, die in jedem Analysebericht enthalten ist, der im Analyseberichtspeichermittel gespeichert ist;
Konvertierungsdatenspeichermittel (5) zum Speichern von Konvertierungsdaten, die Konvertierungsprozesse spezifizieren, die spezifischen Kombinationen jedes Ursprungsmailer-Typs und eines Zielmailer-Typs entsprechen;
Suchmittel (6) zum Abrufen von Konvertierungsdaten, die mit einer Kombination des Ursprungsmailer-Typs und Zielmailer-Typs der spezifischen empfangenen Mailnachricht übereinstimmen; und
Konvertierungsmittel (7) zum Konvertieren eines Elements der spezifischen empfangenen Original-Mailnachricht gemäß einem Konvertierungsprozess, der durch die abgerufenen Konvertierungsdaten beschrieben wird, wenn eine Übereinstimmung für die Kombination gefunden wird,
**dadurch gekennzeichnet, dass**:
das Analyseberichterzeugungsmittel (2) so betrieben werden kann, dass es ein Flag in empfangenen Mailnachrichten überprüft, um zu bestimmen, ob eine Konvertierung durchzuführen ist;
das Konvertierungsmittel (7) so betrieben werden kann, dass es die Konvertierung nur dann durchführt, wenn das Analyseberichterzeugungsmittel bestimmt hat, dass eine Konvertierung durchzuführen ist; und
die Vorrichtung so konfiguriert ist, dass es das Flag an eine Mailnachricht anhängt, wenn das Konvertierungsmittel die Konvertierung an dieser Mailnachricht durchgeführt hat.

9. Computerlesbares Speichermedium, das ein Programm nach einem der Ansprüche 1 bis 6 speichert.

## Revendications

1. Programme adapté pour envoyer et recevoir des messages de courrier électronique, le programme étant configuré de façon à amener un ordinateur à fonctionner en tant que :
des moyens de génération de fichiers d'analyse (2), pour analyser chaque message de courrier électronique reçu dans le but d'identifier un expéditeur et un type de message source le concernant, et pour générer un fichier d'analyse contenant un identifiant de l'expéditeur ainsi que du type d'envoi source, dans lequel le fichier d'analyse généré contient le type d'envoi source qui est l'une des pluralités de différents types d'envoi source ;
des moyens de stockage de fichiers d'analyse (3), pour enregistrer les fichiers d'analyse ;
des moyens de détermination de type d'envoi (4), pour déterminer un type d'envoi de destination d'un message de courrier électronique reçu, sur la base de l'identifiant inclus dans chaque fichier d'analyse enregistré dans les moyens de stockage de fichiers d'analyse ;
des moyens de stockage de données de conversion (5), pour stocker des données de conversion des processus de conversion correspondant à des combinaisons spécifiques de chacun desdits types d'envoi source et desdits types d'envoi de destination ;
des moyens de recherche (6), pour retrouver des données de conversion qui concordent avec une combinaison du type d'envoi source et du type d'envoi de destination du message de courrier électronique spécifique reçu ; et
des moyens de conversion (7), pour convertir un élément du message de courrier électronique original spécifique reçu, conformément à un processus de conversion décrit par les données de conversion retrouvées quand une concordance est trouvée pour la combinaison,
**caractérisé en ce que** :
les moyens de génération de fichiers d'analyse (2) peuvent être utilisés afin d'examiner un drapeau dans des messages de courrier électronique reçus, dans le but de déterminer si une conversion doit être exécutée, ou non ;
les moyens de conversion (7) peuvent être utilisés afin d'exécuter la conversion, seulement si les moyens de génération de fichiers d'analyse (2) ont déterminé qu'une conversion devait être exécutée ; et
le programme est configuré de façon à ajouter le drapeau à un message de courrier électronique, quand les moyens de conversion ont exécuté la conversion sur ce message de courrier électronique.

2. Programme selon la revendication 1, dans lequel :
les données d'identification comprennent des données d'adresse de courrier électronique qui sont collectées sous la forme d'adresses de courrier électronique source ; et
les moyens de détermination de type d'envoi déterminent le type d'envoi de destination en recherchant les données relatives à une adresse de courrier électronique.

3. Programme selon la revendication 1, dans lequel :
les fichiers d'analyse contiennent chacun des données horaires relatives à la dernière mise à jour ; et
quand une pluralité de types d'envoi correspond au même identifiant, les moyens de détermination de type d'envoi choisissent un type d'envoi le plus récent en tant que le type d'envoi de destination, sur la base des données horaires relatives à la dernière mise à jour.

4. Programme selon la revendication 1, dans lequel :
les données de conversion sont fournies pour chacun d'une pluralité de destinataires, chaque élément des données de conversion ayant un identifiant qui représente un destinataire spécifique ; et
les moyens de conversion exécutent la conversion sur la base des données de conversion dont un identifiant du destinataire correspond à l'identifiant de la destination.

5. Programme selon la revendication 4, dans lequel :
l'identifiant comprend un nom d'hôte source ; et
les données de conversion sont fournies pour chacun des noms d'hôte source spécifiques.

6. Programme selon la revendication 1, dans lequel :
le processus de conversion est spécifié pour chacun d'un en-tête, d'un corps d'un fichier et d'une pièce jointe à un fichier.

7. Procédé, exécuté sur un ordinateur, adapté pour envoyer et recevoir des messages de courrier électronique, le procédé comprenant les étapes consistant :
à analyser (S3) chaque message de courrier électronique reçu dans le but d'identifier un expéditeur et un type de message source le concernant, et à générer (S5, S6) un fichier d'analyse contenant un identifiant de l'expéditeur ainsi que du type d'envoi source, dans lequel le fichier d'analyse généré contient le type d'envoi source qui est l'une des pluralités de différents types d'envoi source ;
à enregistrer (S5, S6) les fichiers d'analyse :
à déterminer (S8) un type d'envoi de destination d'un message de courrier électronique spécifique reçu, sur la base de l'identifiant inclus dans le fichier d'analyse enregistré ;
à stocker des données de conversion des processus de conversion correspondant à des combinaisons spécifiques de chacun desdits types d'envoi source et desdits types d'envoi de destination ;
à retrouver (S9, S10, S11, S12) des données de conversion qui concordent avec une combinaison du type d'envoi source et du type d'envoi de destination du message de courrier électronique spécifique reçu ; et
à convertir (S13) un élément du message de courrier électronique original spécifique reçu, conformément au processus de conversion quand une concordance est trouvée pour la combinaison,
dans lequel le procédé est **caractérisé en ce qu'**il consiste :
à examiner un drapeau dans un message de courrier électronique reçu, dans le but de déterminer si une conversion doit être exécutée ;
à exécuter la conversion, seulement quand il a été déterminé qu'une conversion devait être accomplie ; et
à ajouter le drapeau à un message de courrier électronique quand ladite conversion a été exécutée sur ce message de courrier électronique.

8. Appareil (1) adapté pour envoyer et recevoir des messages de courrier électronique, l'appareil comprenant :
des moyens de génération de fichiers d'analyse (2), pour analyser chaque message de courrier électronique reçu dans le but d'identifier un expéditeur et un type de message source le concernant, et pour générer un fichier d'analyse contenant un identifiant de l'expéditeur ainsi qu'un type d'envoi source, dans lequel le fichier d'analyse généré contient le type d'envoi source qui est l'une des pluralités de différents types d'envoi source ;
des moyens de stockage de fichiers d'analyse (3), pour enregistrer les fichiers d'analyse ;
des moyens de détermination de type d'envoi (4), pour déterminer un type d'envoi de destination d'un message de courrier électronique reçu, sur la base de l'identifiant inclus dans chaque fichier d'analyse enregistré dans les moyens de stockage de fichiers d'analyse ;
des moyens de stockage de données de conversion (5), pour stocker des données de conversion des processus de conversion correspondant à des combinaisons spécifiques de chacun desdits types d'envoi source et desdits types d'envoi de destination ;
des moyens de recherche (6), pour retrouver des données de conversion qui concordent avec une combinaison du type d'envoi source et du type d'envoi de destination du message de courrier électronique spécifique reçu ; et
des moyens de conversion (7), pour convertir un élément du message de courrier électronique original spécifique reçu, conformément à un processus de conversion décrit par les données de conversion retrouvées quand une concordance est trouvée pour la combinaison,
**caractérisé en ce que** :
les moyens de génération de fichiers d'analyse peuvent être utilisés afin d'examiner un drapeau dans des messages de courrier électronique reçus, dans le but de déterminer si une conversion doit être exécutée, ou non ;
les moyens de conversion peuvent être utilisés afin d'exécuter la conversion, seulement si les moyens de génération de fichiers d'analyse ont déterminé qu'une conversion devait être exécutée ; et
l'appareil est configuré de façon à ajouter le drapeau à un message de courrier électronique quand les moyens de conversion ont exécuté la conversion sur ce message de courrier électronique.

9. Support de stockage lisible par un ordinateur, sur lequel est enregistré un programme selon l'une quelconque des revendications 1 à 6.
